# EUROPEAN PATENT SPECIFICATION

(11) **EP 4 357 872 B1**
(45) Date of publication and mention of the grant of the patent: **18.06.2025**
(21) Application number: 22824494.3
(22) Date of filing: 09.02.2022
(51) Int. Cl.: G05D 1/224, G08G 1/00, G08G 1/09, G01C 21/20, G08G 1/01, G06N 20/00, G05D 101/15, G05D 107/13, G05D 109/10

(54) **INFORMATION-GENERATING METHOD, INFORMATION-GENERATING DEVICE, AND PROGRAM**
INFORMATIONSERZEUGUNGSVERFAHREN, INFORMATIONSERZEUGUNGSVORRICHTUNG UND PROGRAMM
PROCÉDÉ DE GÉNÉRATION D'INFORMATIONS, DISPOSITIF DE GÉNÉRATION D'INFORMATIONS ET PROGRAMME

(30) Priority: 15.06.2021 JP 2021099525
(43) Date of publication of application: 24.04.2024
(73) Proprietor: Panasonic Intellectual Property Management Co., Ltd., Kadoma-shi, Osaka 571-0057 (JP)
(72) Inventor: KOYAMA, Tatsuya, Kadoma-shi, Osaka 571-0057 (JP)
(74) Representative: Novagraaf International SA
(86) International application number: PCT/JP2022/005115
(87) International publication number: WO 2022/264493

(56) References cited:
- WO-A1-2020/159960
- JP-A- 2001 067 125
- JP-A- 2006 185 438
- JP-B1- 6 815 571
- ONOZUKA YUYA ET AL: "Weakly-Supervised Recommended Traversable Area Segmentation Using Automatically Labeled Images for Autonomous Driving in Pedestrian Environment with No Edges", SENSORS, vol. 21, no. 2, 9 January 2021 (2021-01-09), CH, pages 437, XP093178255, ISSN: 1424-8220, DOI: 10.3390/s21020437
- GAO BIAO ET AL: "Off-Road Drivable Area Extraction Using 3D LiDAR Data", 2019 IEEE INTELLIGENT VEHICLES SYMPOSIUM (IV), IEEE, 9 June 2019 (2019-06-09), pages 1505 - 1511, XP033606160, DOI: 10.1109/IVS.2019.8814143
- DAN BARNES ET AL: "Find Your Own Way: Weakly-Supervised Segmentation of Path Proposals for Urban Autonomy", ARXIV.ORG, CORNELL UNIVERSITY LIBRARY, 201 OLIN LIBRARY CORNELL UNIVERSITY ITHACA, NY 14853, 5 October 2016 (2016-10-05), XP081350113

## Description

### [Technical Field]

The present invention relates to an information generation method, an information generation device, and a program.

### [Background Art]

In recent years, opportunities for machine learning to be used for robot control are increasing. For example, a technique has been conventionally disclosed which uses machine learning to cause a robot to automatically perform the same control as when operated by a human (see Patent Literature (PTL 1)).

### [Citation List]

### [Patent Literature]

[PTL 1] Japanese Unexamined Patent Application Publication No. 2018-149669

The document WO 2020/159960 discloses an information generation method reflecting the preamble of present claim 1.

Further art is disclosed by the documents Onozuka Yuya ET AL: "Weakly-Supervised Recommended Traversable Area Segmentation Using Automatically Labeled Images for Autonomous Driving in Pedestrian Environment with No Edges", Sensors, vol. 21, no. 2, 9 January 2021 (2021-01-09), page 437, XP093178255, GAO BIAO ET AL: "Off-Road Drivable Area Extraction Using 3D LiDAR Data", 2019 IEEE INTELLIGENT VEHICLES SYMPOSIUM (IV), IEEE, 9 June 2019 (2019-06-09), pages 1505-1511, XP033606160, DOI: 0.1109/IVS.2019.8814143, and DAN BARNES ET AL: "Find Your Own Way: Weakly-Supervised Segmentation of Path Proposals for Urban Autonomy", ARXIV.ORG, CORNEL UNIVERSITY LIBRARY, 201 OLIN LIBRARY CORNELL UNIVERSITY ITHACA, NY 14853, 5 October 2016 (2016-10-05), XP081350113.

### [Summary of Invention]

### [Technical Problem]

A known problem for machine learning is that it is difficult to generate learning data appropriately.

The present disclosure provides an information generation method and the like capable of appropriately generating learning data.

### [Solution to Problem]

An information generation method according to one aspect of the present invention is an information generation method as defined in present claim 1.

It should be noted that these general and specific aspects may be implemented using a system, a device, an integrated circuit, a computer program, or a computer-readable recording medium such as a CD-ROM, or any combination of systems, devices, integrated circuits, computer programs, and recording media.

### [Advantageous Effects of Invention]

The information generation method according to the present disclosure is capable of appropriately generating learning data.

### [Brief Description of Drawings]

[FIG. 1]

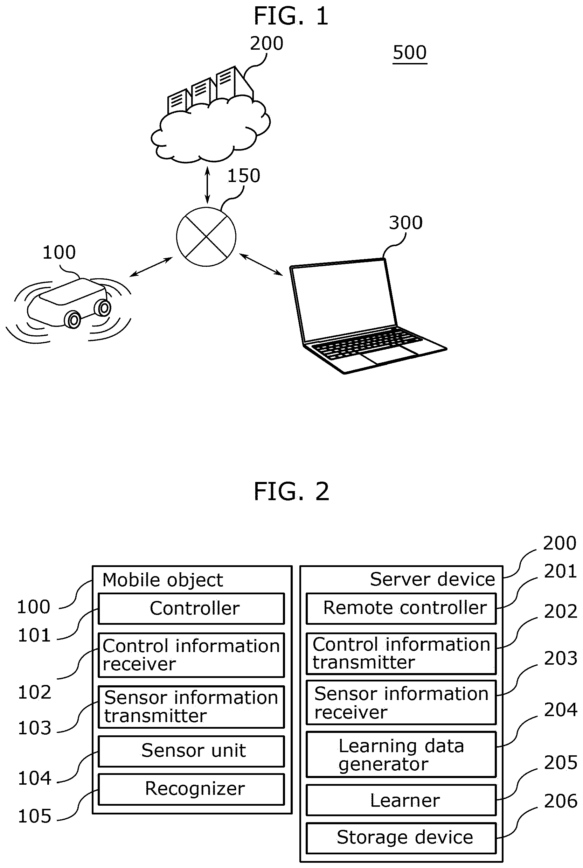

   FIG. 1 schematically illustrates a configuration of a learning system according to an embodiment.
[FIG. 2]
   FIG. 2 schematically illustrates a functional configuration of a vehicle according to the embodiment.
[FIG. 3]

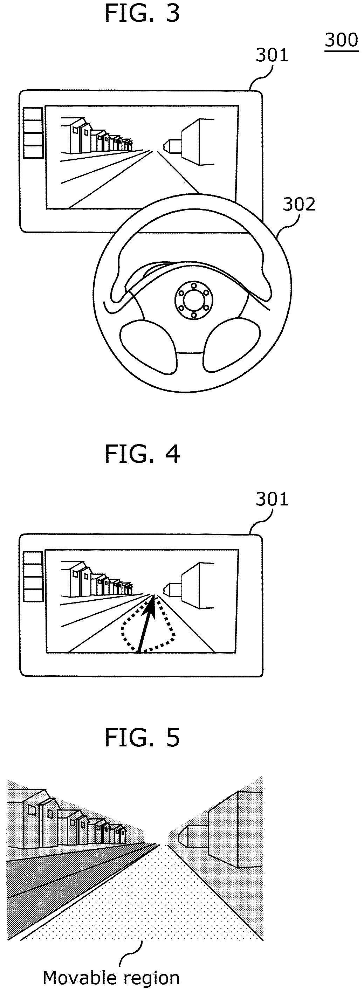

   FIG. 3 schematically illustrates a configuration of a remote control device according to the embodiment.
[FIG. 4]
   FIG. 4 illustrates an example of a semi-automatic remote control according to the embodiment.
[FIG. 5]
   FIG. 5 is a first diagram illustrating an example of training data according to the embodiment.
[FIG. 6]

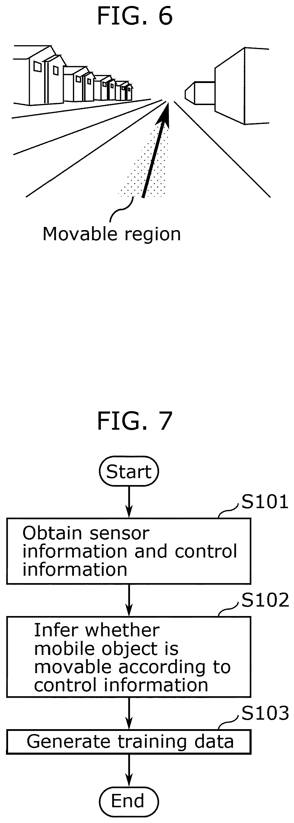

   FIG. 6 is a second diagram illustrating an example of training data according to the embodiment.
[FIG. 7]
   FIG. 7 is a flowchart illustrating processes performed by the learning system according to the embodiment.

### [Description of Embodiment]

### (Underlying Knowledge Forming Basis of the Present Disclosure)

The inventor of the present disclosure has found that the following problems arise with the technique, which uses machine learning to cause robots and the like to automatically perform control (autonomously perform operation), described in the "Background Art" section.

In order to create control that models human operations such that it is automatically performed, learning of control patterns using an enormous amount of training data is required. Annotation information, such as correct/incorrect, is added to each of the enormous amount of training data in order to distinguish between a correct control pattern and an incorrect control pattern. In the control of a robot or the like, since only simple annotation information such as moving or not moving is required to be added, it is relatively easy to add such annotation information.

However, in order to automatically determine a movement region (also referred to as a travel region) for automatically moving a mobile object, for example, a movable region where the mobile object is movable and a non-movable region where the mobile object is not movable are required to be added as annotation information to an image in which a predetermined region is captured. Such an addition of annotation information requires a high labor cost because it requires a human to specify movable and non-movable regions in units of pixels while viewing the image. The high labor cost hinders generation of an enormous amount of data for learning. In view of the above, the present disclosure provides, for example, an information generation device which is capable of automatically adding annotation information regarding a self-propelled (autonomously movable) mobile object and generating information for machine learning, and an information generation method performed by the information generation device.

With the information generation method and the like, it is possible to generate training data usable for learning of a learning model for determining the movement region of a self-propelled mobile object while reducing labor cost. Accordingly, it is possible to accelerate the preparation of training data, which has traditionally been a barrier for updating the learning model for determining the movement region, and to frequently update the learning model.

In order to solve the above problem, an information generation method according to one aspect of the present disclosure is an information generation method performed by an information generation device that generates information for a learning model that infers whether a mobile object is movable in a predetermined region. The information generation method includes: obtaining at least (i) first information and (ii) second information when the mobile object moves in a first region, the first information being obtained from a sensor provided in the mobile object, the second information relating to movement of the mobile object; inferring whether the mobile object is movable in the first region according to the second information; and generating fourth information for the learning model, the fourth information associating the first information, the second information, and third information with one another, the third information indicating an inference result which is obtained by the inferring.

In the information generation method, the fourth information is generated which associates the first information, the second information, and the third information with one another. The first information relates to the movement of a mobile object during moving in the first region, the second information is obtained from a sensor when the mobile object moves in the first region, and the third information relates to an inference result of whether the mobile object is movable in the first region. In other words, a result of inferring whether the mobile object is movable in the first region has been added to the fourth information as annotation information. With this, by performing machine learning with the fourth information, a learning model can be constructed which is capable of outputting whether the mobile object is movable in the predetermined region corresponding to the third information from the first information and the second information in the predetermined region. Since the fourth information to which the annotation information has been automatically added is generated in such a manner, it eliminates the need for operations conventionally performed for adding annotation which requires a high labor cost. As a result, learning data can be appropriately generated.

Moreover, for example, it may be that the inferring is performed based on whether a difference between movement data of the mobile object during moving in the first region and a threshold value is within a predetermined range, the movement data being included in the first information obtained when the mobile object moved according to the second information.

With this, the third information can be generated based on the first information obtained when the mobile object moved according to the second information. As a result, since the fourth information which associates the first information, the second information, and the third information with one another can be generated, it eliminates the needs for the operations conventionally performed for adding annotation which requires a high labor cost. Accordingly, learning data can be appropriately generated.

Moreover, it may be that the second information is input by an operator who remotely controls the mobile object.

With this, the fourth information, that is, learning data can be appropriately generated from the first information and the second information obtained when the mobile object moves according to the second information input by the operator who remotely operates the mobile object.

Moreover, the information generation method further includes estimating a difficulty of movement of the mobile object, in which the generating includes generating the fourth information which associates the first information, the second information, fifth information, and the third information with one another, the fifth information indicating an estimation result of the difficulty obtained by the estimating.

With this, the fourth information, which includes fifth information associated with the first information, the second information, and the third information, can be generated. Based on the associated fifth information in the generated fourth information, it is possible to change the aspects and the like of machine learning according to the estimation result of the difficulty of the movement of the mobile object.

Moreover, the generating is performed only when the third information and the fifth information satisfy a predetermined condition.

With this, the fourth information is generated only when the third information and the fifth information satisfy a predetermined condition indicating that the fourth information to be generated is appropriate learning data, and the fourth information is not generated when the fourth information does not satisfy a predetermined condition indicating that the fourth information to be generated is not appropriate learning data. As a result, the fourth information which is inappropriate for use as learning data and whose generation is meaningless is not generated.

Moreover, it may be that the fourth information includes a reliability that is estimated based on the first information.

With this, the fourth information is generated which includes reliability that is estimated based on the first information. By using the fourth information as learning data, information about reliability can be used in machine learning.

Moreover, for example, it may be that the information generation method further includes: obtaining sixth information which divides the first region into a plurality of segments for each of types, in which the fourth information includes a combined image in which information indicating whether the mobile object is movable based on the third information is superimposed on an image of the first region included in the first information for each of the plurality of segments obtained by dividing the image of the first region according to the sixth information.

With this, for each of a plurality of segments obtained by dividing a single image based on the sixth information, it is possible to output a combined image on which information indicating whether the mobile object is movable is superimposed.

Moreover, for example, it may be that the information generation method includes: identifying an other mobile object that is present in the first region based on the first information, in which the inferring includes at least one of: (a) inferring that the mobile object is movable in the first region where the other mobile object is present, when the other mobile object satisfies a first condition; or (b) inferring that the mobile object is not movable in the first region where the other mobile object is present, when the other mobile object satisfies a second condition.

With this, third information can be generated inferring that the mobile object is movable in the first region where the other mobile object is present when the other mobile object that is present in the first region satisfies a first condition, and that the mobile object is not movable in the first region where the other mobile object is present when the other mobile object that is present in the first region satisfies the second condition. Since the fourth information, in which such third information is associated with the first information and the second information, can be generated, it eliminates the need for the operations for adding annotation which have been conventionally performed and requires a high labor cost. As a result, learning data can be appropriately generated.

Moreover, a program according to one aspect of the present disclosure is a program for causing a computer to perform the information generation method.

With this, the same advantageous effects as the information generation method described above can be obtained using the computer.

Moreover, an information generation device according to one aspect of the present disclosure is an information generation device which generates information for a learning model that infers whether a mobile object is movable in a predetermined region. The information generation device includes: an obtainer which obtains at least (i) first information and (ii) second information when the mobile object moves in a first region, the first information being obtained from a sensor provided in the mobile object, the second information relating to the first region; an inference unit which infers whether the mobile object is movable in the first region based on the first information; and a generator which generates fourth information for the learning model, the fourth information associating the first information, the second information, and third information with one another, the third information indicating an inference result which is obtained by the inference unit.

With this, the same advantageous effects as the information generation method described above can be obtained.

It should be noted that these general and specific aspects may be implemented using a system, a device, an integrated circuit, a computer program, or a computer-readable recording medium such as a CD-ROM, or any combination of systems, devices, integrated circuits, computer programs, and recording media.

Hereinafter, an embodiment will be specifically described with reference to the drawings.

It should be noted that the embodiment described below shows a general or specific example. The numerical values, shapes, materials, structural elements, the arrangement and connection of the structural elements, steps, the order of steps, etc., illustrated in the following embodiment are mere examples, and therefore do not limit the present invention. Moreover, among the structural elements in the following embodiment, those not recited in any of the independent claims defining the most generic part of the inventive concept are described as optional structural elements.

### [Embodiment]

First, a configuration of a learning system according to an embodiment will be described.

FIG. 1 schematically illustrates a configuration of a learning system according to the present embodiment. FIG. 2 schematically illustrates a functional configuration of a vehicle according to the embodiment.

As illustrated in FIG. 1, learning system 500 according to the present embodiment is implemented by mobile object 100, server device 200 connected via network 150, and remote control device 300.

Mobile object 100 is a device capable of autonomous movement, such as an automobile, robot, drone, bicycle, and wheelchair, and is used for the purpose of delivering packages, for example, while the package is placed therein. Mobile object 100 includes a motor or the like that serves as power, a drive unit such as wheels that are driven by the motor, and a functional unit that stores a power source (for example, electric power) for operating the power. Learning system 500 is only required to generate training data with annotation added, and a dedicated mobile object for the learning may be used. The learning-specific mobile object does not have to include functions such as placing packages, and does not have to include functions for autonomous movement.

Network 150 is a communication network for communicably connecting mobile object 100, server device 200, and remote control device 300. Here, although a communication network, such as the Internet, is used as network 150, network 150 is not limited to such an example. Moreover, the connection between mobile object 100 and network 150, the connection between server device 200 and network 150, and the connection between remote control device 300 and network 150 may be performed by wireless communication or by wired communication. Due to its nature, mobile object 100 may be connected to network 150 by wireless communication.

In order to connect mobile object 100 and network 150 by wired communication, mobile object 100 may include a storage device for accumulating various data. At the time when the power source and the like of mobile object 100 is charged, wired connection may be established between mobile object 100 and network 150, so that the various data accumulated in the storage device may be transmitted to network 150.

As illustrated in FIG. 2, mobile object 100 includes controller 101, control information receiver 102, sensor information transmitter 103, sensor unit 104, and recognizer 105. Each functional block that forms mobile object 100 is implemented using, for example, a processor and memory. Details of each functional block will be described later.

Server device 200 is a device for processing information and the like, and is implemented using, for example, a processor and memory. Server device 200 may be implemented by an edge computer or by a cloud computer. Moreover, one server device 200 may be provided for one mobile object 100, or one server device 200 may be provided for a plurality of mobile objects 100.

As illustrated in FIG. 2, server device 200 includes remote controller 201, control information transmitter 202, sensor information receiver 203, learning data generator 204, learner 205, and storage device 206. The details of each of the functional blocks included in server device 200 will be described later.

FIG. 3 schematically illustrates a configuration of a remote control device according to the embodiment. Remote control device 300 is implemented, for example, by a computer. As illustrated in FIG. 3, remote control device 300 includes, for example, display device 301 and steerer 302 which is a user interface for input. In addition to steerer 302, as the user interface, a keyboard, a touch panel, a mouse, a dedicated controller, a foot panel, a combination of VR glasses and a controller, a sound collector for voice input, etc. may be used, or a combination of these may be used. Remote control device 300 is used to remotely control mobile object 100.

Hereinafter, while continuously referring to FIG. 1 to FIG. 3, the transmission and reception of data between each structural element will be described, and the function of each structural element will be described.

Sensor unit 104 is connected to sensors (not illustrated), and obtains the result of sensing the surrounding environment of mobile object 100 (sensor information: first information) from the sensors. Examples of the sensors include cameras, LiDAR, radars, sonars, microphones, GPS, vibration sensors, acceleration sensors, gyro sensors, and temperature sensors. Sensor unit 104 transmits the obtained sensor information to sensor information transmitter 103, recognizer 105, and controller 101.

Recognizer 105 obtains the sensor information transmitted from sensor unit 104, recognizes the surrounding environment of mobile object 100, and transmits the recognition result to sensor information transmitter 103 and controller 101. The recognition of the surrounding environment performed by recognizer 105 includes generating information (sixth information) that divides the surrounding environment of mobile object 100 into a plurality of segments for each type. In addition, recognizer 105 recognizes the surrounding environment necessary for the movement of mobile object 100. For example, recognizer 105 recognizes obstacles to mobile object 100, other mobile objects, and movable regions where mobile object 100 is movable.

Recognizer 105 also performs a process of recognizing the difficulty of movement of mobile object 100 by estimating the difficulty. Here, the difficulty of movement of mobile object 100 is estimated based on, for example, the number of times mobile object 100 applies brakes and the number of times mobile object 100 changes the direction which are required for mobile object 100 to move within the region, and the magnitude and the detected number of vibrations that adversely affect the movement of mobile object 100, and the number of other mobile objects. The greater the number (or the magnitude), the higher the difficulty of movement of mobile object 100. Moreover, examples of cases where the difficulty of movement of mobile object 100 is high include roads with narrow roads, such as roads where it is difficult for mobile object 100 to pass other mobile objects, roads where on-street parking of cars occurs frequently, roads scattered with objects large enough to hinder movement of mobile object 100, and roads with radio wave environments such as low quality (frequently interrupted) communication with network 150.

At least part of the process of recognizing the surrounding environment may be executed sequentially as soon as the sensor information is input from sensor unit 104, or the sensor information may be buffered (accumulated) in a data storage area (not illustrated) and the at least part of the process may be executed later (for example, after the delivery service using mobile object 100 ends). Here, for the recognition of the surrounding environment, a learning model learned in advance by machine learning may be used or the recognition of the surrounding environment may be performed based on a predetermined rule. Note that this learning model may be a learning model generated by learning using training data with the annotation information generated according to the present embodiment.

Sensor information transmitter 103 transmits the sensor information transmitted from sensor unit 104 and the recognition result transmitted from recognizer 105 to sensor information receiver 203 of server device 200. It should be noted that transmission and reception of information between mobile object 100 and server device 200, including the communication here, may undergo alteration of information such as compression for the purpose of data reduction and encryption for the purpose of maintaining confidentiality. In this case, restoration of altered information such as decompression of compressed information and decrypting of encrypted information may be performed by the functional block that received the altered information. In addition, various types of information may be transmitted and received only when the network bandwidth (communication capacity) between mobile object 100 and server device 200 is greater than or equal to a predetermined value. Additional information, such as an ID and timestamp, may also be added to match the information transmitted and received. In such a manner, information may be transmitted and received between mobile object 100 and server device 200 in any forms.

Sensor information receiver 203 transmits, to remote controller 201 and learning data generator 204, the sensor information transmitted from sensor information transmitter 103 and the recognition result.

Remote controller 201 determines the moving direction of mobile object 100 as necessary based on the sensor information and the recognition result transmitted from sensor information receiver 203, and performs remote control so that mobile object 100 moves in the determined moving direction. Specifically, control information (second information) relating to movement of mobile object 100 for remote control is generated, and is transmitted to control information transmitter 202. The control information is also transmitted to learning data generator 204.

The determination of the moving direction of mobile object 100 according to the present embodiment, that is, the remote control of mobile object 100 is performed by an operator. Accordingly, remote control device 300 illustrated in FIG. 3 is used by an operator.

For example, an image of the surrounding environment of the mobile object included in the sensor information is transmitted from remote controller 201 to remote control device 300 and displayed on display device 301. A display device, such as a smartphone or VR/AR glasses, may be used in place of display device 301.

The operator is able to check the sensor information (the image of the surrounding environment in this case) displayed on display device 301. When the operator determines that remote control is necessary, the operator is able to control the moving direction of mobile object 100. The moving direction is determined by the operator determining the region where mobile object 100 is movable. After that, the operator makes an input through the user interface such as steerer 302 so that mobile object 100 moves in the determined moving direction. An input signal is transmitted from remote control device 300 to remote controller 201 based on the input. Remote controller 201 generates control information according to the input signal. The control information generated by remote controller 201 includes, for example, information relating to the angle of the tires as the driving unit of mobile object 100, information relating to accelerator position and opening/closing timing, and information relating to brake strength and braking timing.

In place of steerer 302, a dedicated controller, a smartphone, a keyboard, a mouse and the like may be used.

The determination of the moving direction of mobile object 100 and the remote control of mobile object 100 may be performed automatically or semi-automatically. For example, the moving direction may be automatically determined from among the movable region of mobile object 100 based on the recognition result, and control information may be generated so that mobile object 100 moves in the determined moving direction. In this case, operator intervention is not essential, and remote control device 300 does not have to be provided. Moreover, by incorporating this automatic remote control configuration into mobile object 100, it is possible to configure learning system 500 without providing remote controller 201 in server device 200.

On the other hand, the determination of the moving direction of mobile object 100 can also be performed manually. For example, an administrator or a maintenance company of mobile object 100 may move mobile object 100 by directly urging mobile object 100 by, for example, pushing mobile object 100 by hand. Moreover, the administrator or maintenance company of mobile object 100 may move mobile object 100 by remotely controlling mobile object 100 from the vicinity of mobile object 100 using radio control or infrared control. Furthermore, the manager or maintenance company of mobile object 100 may move mobile object 100 by operating a device such as a steerer provided in mobile object 100 while riding in mobile object 100.

FIG. 4 illustrates an example of remote control semi-automatically performed according to the embodiment. As illustrated in FIG. 4, it may be that candidates of moving direction (thick-line arrow and thick-dashed line in FIG. 4) are automatically generated based on the sensor information and recognition result and displayed, and the moving direction is determined by causing an operator to select an appropriate one from the candidates. This facilitates simplified configuration of the user interface.

Control information transmitter 202 transmits the control information transmitted from remote controller 201 to control information receiver 102 in mobile object 100. Control information receiver 102 transmits, to controller 101, the control information transmitted from control information transmitter 202. Controller 101 then moves mobile object 100 by driving a driving unit and the like according to the control information transmitted from control information receiver 102.

Here, the control information generated by the intervention of a person or the functions of server device 200 with relatively high performance as described above is information which allows mobile object 100 to move appropriately. Moreover, in generating the control information, the sensor information transmitted to remote controller 201 includes information directly obtained by the mobile object from the surrounding environment in order to determine the moving direction of mobile object 100. In other words, by using sensor information as input data for training data and adding control information to the input data as annotation information, it is possible to automatically generate training data with the annotation information added. That is, the generation of information for machine learning, which will be described below, is performed using at least the sensor information and control information.

Learning data generator 204 obtains the sensor information transmitted from sensor information receiver 203 and the control information input from remote controller 201. The function of learning data generator 204 relating to the obtainment of information is an example of an element which realizes the function of an obtainer.

Learning data generator 204 also obtains the recognition result transmitted from sensor information receiver 203. Training data for machine learning (fourth information) is generated by adding, to the sensor information as annotation information, the region information (region where mobile object 100 is movable) on the sensor information corresponding to the region where mobile object 100 actually moved and information indicating, for example, the difficulty of the movement in the surrounding environment. The function of learning data generator 204 relating to the generation of training data is an example of an element which realizes the function of a generator.

Learning data generator 204 further generates an inference result (third information) by inferring whether the movement based on the control information was appropriate, that is, whether mobile object 100 was actually movable in the region, based on the sensor information obtained by sensor unit 104 when mobile object 100 moved based on the control information. The function of learning data generator 204 relating to the generation of the inference result is an example of an element which realizes the function of an inference unit. Learning data generator 204 is an example of an information generation device which includes the functions of the obtainer, the generator, and the inference unit.

For example, learning data generator 204 performs the inference based on the difficulty of the movement of mobile object 100 that is estimated based on, for example, the number of times mobile object 100 applies brakes and the number of times mobile object 100 changes the direction which are required for mobile object 100 to move according to the control information, the magnitude and the detected number of vibrations that adversely affect the movement of mobile object 100, and the number of other mobile objects. For example, when the number of times mobile object 100 actually applied brakes is greater than a threshold value that is set based on the movement distance and the like of mobile object 100, such as one, two, three, five, or ten times, an inference result is generated which indicates that mobile object 100 was not movable in the region, and when the number of times mobile object 100 actually applied brakes is less than the threshold value, an inference result is generated which indicates that mobile object 100 was movable in the region.

Similarly, for example, when the difference between each of the number of times mobile object 100 changes the direction, the magnitude and the detected number of vibrations that adversely affect the movement of mobile object 100, and the number of other mobile objects and a threshold value that is set based on the movement distance of mobile object 100 is within a predetermined range, an inference result is generated which indicates that mobile object 100 was movable in the region, and when the difference exceeds the predetermined range, an inference result is generated which indicates that mobile object 100 was not movable in the region.

The inference result thus generated is used to verify whether mobile object 100 was actually movable in the region. For example, when mobile object 100 was not movable according to the control information, information indicating that mobile object 100 is not movable is added to the control information as annotation information. When only annotation information indicating that mobile object was movable is desired to be used for machine learning, training data with annotation information relating to the above control information should be excluded. In addition, when the learning model is a model for distinguishing (clustering) whether the region is a movable region or a non-movable region, both the annotation information indicating that mobile object 100 is movable and the annotation information indicating that mobile object 100 is not movable may be used. In such a manner, the inference results generated above are used to determine the type of annotation information.

Moreover, the information (fifth information) relating to the difficulty of movement described above may also be used. Specifically, even if the combination of the sensor information, the control information, and the inference result satisfies the threshold criteria and indicate that mobile object 100 is movable, when the movement of mobile object 100 is relatively difficult, the inference result may indicate, due to other factors, that mobile object 100 is not movable. In other words, the combination of sensor information, control information, and inference result with high difficulty of movement has poor reliability. Accordingly, such combinations of sensor information, control information, and inference results may not be used for machine learning. Alternatively, such combinations of sensor information, control information, and inference results may be considered to have low reliability, and may be differentiated from the reliability of other combinations of sensor information, control information, and inference results and used for machine learning. Moreover, the difficulty of movement may be used for clustering movable regions. For example, it may be that the region where mobile object 100 is movable and the difficulty of movement is high is classified as a "region that requires careful movement", and the region where mobile object 100 is movable and the difficulty of movement is low is classified as a "region where mobile object 100 is easily movable", and they are used for machine learning.

On the other hand, when it is possible to accurately determine whether mobile object 100 is movable in the region with a combination of sensor information, control information, and inference result in which the difficulty of the movement is high, the region where mobile object 100 is movable can be expanded. In other words, in a situation where the advantage of expanding the movable region is emphasized, for example, when the movable region is small or alternative movable region is small, a combination of sensor information, control information, and inference result with high difficulty of movement may be preferentially used for machine learning. A sufficient amount of training data necessary for learning needs to be generated in order to accurately determine whether mobile object 100 is movable in a region with a combination of sensor information, control information, and an inference result with high difficulty of movement. Therefore, the advantageous effects of the information generation method according to the present embodiment can be significant.

It should be noted that the term "preferentially used for machine learning" means that after all machine learning using training data with combinations of sensor information, control information, and inference results with high difficulty of movement is completed, machine learning for training data with other combinations is performed. At this time, machine learning for other combinations of training data may be omitted. Other combinations of training data are training data for regions where the difficulty of movement is relatively low. In other words, in such regions, rule-based autonomous movement based on sensor information may be sufficient without relying on machine learning, and thus, machine learning for other combinations of training data can be omitted.

Alternatively, as a method for preferentially using a combination of sensor information, control information, and inference result with high difficulty of movement for machine learning, learning may be performed using training data with combinations of low difficulty, and then learning using training data with combinations of high difficulty may be performed. Depending on the conditions of machine learning, compared to when preferentially using in the time series as above, the influence of data learned later may be high, and the above method is effective in such cases.

Moreover, after the completion of learning with all training data, further learning may be performed with training data with high difficulty. Moreover, bias may be applied so that training data with higher difficulty influences learning results more. For example, the training data with low difficulty may be reduced so that the training data with high difficulty is greater in the ratio of the number of training data with high difficulty to the number of training data with low difficulty.

To summarize the above description, in the present embodiment, based on the combination of sensor information and control information, training data to which annotation information for machine learning has been added is generated when both the inference result indicating whether mobile object 100 is movable and the difficulty of the movement of mobile object 100 satisfy a predetermined condition. Learning data generator 204 transmits the training data thus generated to storage device 206 for storage.

FIG. 5 is a first diagram illustrating an example of training data according to the embodiment. FIG. 6 is a second diagram illustrating an example of training data according to the embodiment. As illustrated in FIG. 5, annotation information indicating that the region where mobile object 100 was movable is a movable region (rough dotted hatching in FIG. 5) is added to the training data thus generated. In this way, the training data output in the present embodiment may divide the image of the region where mobile object 100 moves, which is included in the sensor information, into a plurality of segments, and may include, for each of the segments, a combined image in which information, indicating whether mobile object 100 is movable based on the inference result, is superimposed on the image. Accordingly, for example, information (sixth information) may be obtained which divides the region where mobile object 100 moves into a plurality of segments for each type. The information may be generated separately by using, for example, recognition results.

When determining the region where mobile object 100 is movable, a region having a predetermined width along the moving direction may be used by superimposing the history of passing the same region several times. Alternatively, as illustrated in FIG. 6, a region may be used which is obtained by combining the own width of mobile object 100 to the region where mobile object 100 passes once. The association between the region where mobile object 100 moved and the pixels on the image may be determined based on a combination of control information, sensor information, and additional information such as IDs and timestamps for matching information.

Moreover, a region where a mobile object other than mobile object 100 (another mobile object) that moves in the surrounding environment may be used for annotation information. Specifically, a mobile object that is sufficiently larger and faster than mobile object 100 may be identified as a dangerous mobile object, and the region where such a dangerous mobile object moves may be determined as a non-movable region. An example of such a dangerous mobile object for mobile object 100 for package transportation is an automobile. Alternatively, an automobile and the like may be directly identified by a technique such as pattern matching.

In addition, a mobile object having a size equivalent to the size of mobile object 100 and not moving so fast may be identified as a trackable mobile object, and the region where such a trackable mobile object moves may be determined as a movable region. Examples of such a trackable mobile object for mobile object 100 for package transportation include bicycles and wheelchairs. Alternatively, bicycles, wheelchairs, and the like may be directly identified by a technique such as pattern matching.

In addition, annotation information may be added not only to part of the sensor information (a certain region in the image of one frame, that is, some pixels, etc.), but also to the entire sensor information (the whole image of one frame, etc.). With this, for example, it is possible to construct a learning model that provides a determination result indicating whether the mobile object is movable or not or whether it is easy or difficult for the mobile object to move when a single image is input as sensor information.

Learner 205 causes a learning model to perform learning through machine learning using training data to which the annotation information has been added and which is stored in storage device 206. After the completion of the learning, learner 205 outputs the learning model after the learning to the recognizer.

Next, learning system 500 described above will be described with reference to FIG. 7. FIG. 7 is a flowchart illustrating the processes performed by the learning system according to the embodiment.

As illustrated in FIG. 7, learning data generator 204 first obtains sensor information and control information (obtaining step S101). The sensor information and the control information are obtained from the mobile object via sensor information obtainer 203.

Next, learning data generator 204 obtains sensor information and recognition result of mobile object 100 obtained when mobile object 100 moves according to the control information, and infers, based on the sensor information and recognition result, whether the region where mobile object 100 moves according to the control information is a movable region where mobile object 100 is movable (inferring step S102).

Next, learning data generator 204 generates training data with annotation information added, based on the sensor information, the control information, and the inference result obtained in inferring step S102 (generating step S103).

Since appropriate annotation information has been added to the training data thus generated, the training data can be used as it is as training data for machine learning. In addition, since the training data is generated automatically, the labor cost is reduced, and a large amount of training data can be generated at once by using a plurality of mobile objects 100 and the like.

Although the information generation method and the like according to one or more aspects has been described above based on the embodiment, the present disclosure is not limited to the embodiment. Various modifications of the embodiment as well as embodiments resulting from arbitrary combinations of the structural elements of the embodiment that may be conceived by those skilled in the art are intended to be included within the scope of one or more aspects as long as these do not depart from the essence of the present disclosure.

For example, by providing all of the functions of the server device according to the embodiment in a mobile object, information for a learning model which infers whether the mobile object is movable in a predetermined region in a stand-alone manner can be efficiently generated.

Each of the structural elements in the above-described embodiment may be configured in the form of an exclusive hardware product, or may be realized by executing a software program suitable for each of the structural elements. Each of the structural elements may be realized by means of a program executing unit, such as a central processing unit (CPU) and a processor, reading and executing the software program recorded on a recording medium such as a hard disk or a semiconductor memory. Here, the software which realizes the information generation device and the like according to the above-described embodiment is a program as described below.

In other words, the program is a program that causes a computer to execute the information generation method.

### [Industrial Applicability]

The present disclosure is usable, for example, for learning of a learning model that is used to, for example, determine the movement region in a self-propelled mobile object.

### [Reference Signs List]

- 100: mobile object
- 101: controller
- 102: control information receiver
- 103: sensor information transmitter
- 104: sensor unit
- 105: recognizer
- 150: network
- 200: server device
- 201: remote controller
- 202: control information transmitter
- 203: sensor information receiver
- 204: learning data generator
- 205: learner
- 206: storage device
- 300: remote control device
- 301: display device
- 302: steerer
- 500: learning system

## Claims

1. An information generation method performed by an information generation device that generates learning data for a learning model that infers whether a mobile object (100) is movable in a predetermined region, the information generation method comprising:
obtaining at least (i) first information and (ii) second information when the mobile object (100) moves in a first region, the first information being obtained from a sensor provided in the mobile object (100), the second information relating to movement of the mobile object (100);
inferring whether the mobile object (100) is movable in the first region according to the second information; and
generating fourth information for the learning model, the fourth information associating the first information, the second information, and third information with one another, the third information indicating an inference result which is obtained in the inferring.
**characterized in that** the method further comprises:
estimating a difficulty of movement of the mobile object (100),
wherein the generating includes generating the fourth information which associates the first information, the second information, fifth information, and the third information with one another, the fifth information indicating an estimation result of the difficulty obtained in the estimating, and
wherein the generating is performed only when the third information and the fifth information satisfy a predetermined condition.

2. The information generation method according to claim 1,
wherein the inferring is performed based on whether a difference between movement data of the mobile object (100) during moving in the first region and a threshold value is within a predetermined range, the movement data being included in the first information obtained when the mobile object (100) moved according to the second information.

3. The information generation method according to claim 2,
wherein the second information is input by an operator who remotely controls the mobile object (100).

4. The information generation method according to any one of claims 1 to 3,
wherein the fourth information includes a reliability that is estimated based on the first information.

5. The information generation method according to any one of claims 1 to 4, further comprising:
obtaining sixth information which divides the first region into a plurality of segments for movable and non-movable regions,
wherein the fourth information includes a combined image in which information indicating whether the mobile object (100) is movable based on the third information is superimposed on an image of the first region included in the first information for each of the plurality of segments obtained by dividing the image of the first region according to the sixth information.

6. The information generation method according to any one of claims 1 to 5, comprising:
identifying an other mobile object that is present in the first region based on the first information,
wherein the inferring includes at least one of:
(a) inferring that the mobile object is movable in the first region where the other mobile object is present, when the other mobile object satisfies a first condition; or
(b) inferring that the mobile object is not movable in the first region where the other mobile object is present, when the other mobile object satisfies a second condition.

7. A program for causing a computer to execute the information generation method according to any one of claims 1 to 6.

8. An information generation device which is configured to generate learning data for a learning model that infers whether a mobile object (100) is movable in a predetermined region, the information generation device comprising:
an obtainer which is configured to obtain at least (i) first information and (ii) second information when the mobile object moves in a first region, the first information being obtained from a sensor provided in the mobile object, the second information relating to the first region;
an inference unit which is configured to infer whether the mobile object is movable in the first region based on the first information; and
a generator which is configured to generate fourth information for the learning model, the fourth information associating the first information, the second information, and third information with one another, the third information indicating an inference result which is obtained by the inference unit,
**characterized in that** the obtainer further estimates a difficulty of movement of the mobile object (100),
wherein the generator includes generating the fourth information which associates the first information, the second information, fifth information, and the third information with one another, the fifth information indicating an estimation result of the difficulty obtained in the estimating, and
wherein the generating is performed only when the third information and the fifth information satisfy a predetermined condition.

## Patentansprüche

1. Informationserzeugungsverfahren, das von einer Informationserzeugungsvorrichtung durchgeführt wird, die Lerndaten für ein Lernmodell erzeugt, das ableitet, ob ein mobiles Objekt (100) in einer vorbestimmten Region bewegbar ist, wobei das Informationserzeugungsverfahren Folgendes umfasst:
Erhalten von mindestens (i) ersten Informationen und (ii) zweiten Informationen, wenn sich das mobile Objekt (100) in einer ersten Region bewegt, wobei die ersten Informationen von einem Sensor erhalten werden, der im mobilen Objekt (100) bereitgestellt ist, wobei sich die zweiten Informationen auf eine Bewegung des mobilen Objekts (100) beziehen;
Ableiten gemäß den zweiten Informationen, ob das mobile Objekt (100) in der ersten Region bewegbar ist; und
Erzeugen von vierten Informationen für das Lernmodell, wobei die vierten Informationen die ersten Informationen, die zweiten Informationen und dritte Informationen miteinander verknüpfen, wobei die dritten Informationen ein Ableitungsergebnis anzeigen, das beim Ableiten erhalten wird,
**dadurch gekennzeichnet, dass** das Verfahren ferner Folgendes umfasst:
Schätzen einer Schwierigkeit der Bewegung des mobilen Objekts (100),
wobei das Erzeugen das Erzeugen der vierten Informationen beinhaltet, die die ersten Informationen, die zweiten Informationen, fünfte Informationen und die dritten Informationen miteinander verknüpfen, wobei die fünften Informationen ein Schätzergebnis der Schwierigkeit anzeigen, das beim Schätzen erhalten wird, und
wobei das Erzeugen nur durchgeführt wird, wenn die dritten Informationen und die fünften Informationen eine vorbestimmte Bedingung erfüllen.

2. Informationserzeugungsverfahren nach Anspruch 1,
wobei das Ableiten darauf basierend durchgeführt wird, ob eine Differenz zwischen Bewegungsdaten des mobilen Objekts (100) während einer Bewegung in der ersten Region und einem Schwellwert innerhalb eines vorbestimmten Bereichs liegt, wobei die Bewegungsdaten in den ersten Informationen beinhaltet sind, die erhalten werden, wenn das mobile Objekt (100) gemäß den zweiten Informationen bewegt wird.

3. Informationserzeugungsverfahren nach Anspruch 2,
wobei die zweiten Informationen von einem Bediener eingegeben werden, der das mobile Objekt (100) fernsteuert.

4. Informationserzeugungsverfahren nach einem der Ansprüche 1 bis 3,
wobei die vierten Informationen eine Zuverlässigkeit beinhalten, die auf Basis der ersten Informationen geschätzt wird.

5. Informationserzeugungsverfahren nach einem der Ansprüche 1 bis 4, das ferner Folgendes umfasst:
Erhalten von sechsten Informationen, die die erste Region in eine Vielzahl von Segmenten für bewegbare und nicht bewegbare Regionen teilen,
wobei die vierten Informationen ein kombiniertes Bild beinhalten, in dem Informationen, die auf Basis der dritten Informationen anzeigen, ob das mobile Objekt (100) bewegbar ist, ein Bild der ersten Region überlagern, das in den ersten Informationen für jedes der Vielzahl von Segmenten beinhaltet ist, die durch Teilen des Bildes der ersten Region gemäß den sechsten Informationen erhalten werden.

6. Informationserzeugungsverfahren nach einem der Ansprüche 1 bis 5, das Folgendes umfasst:
Identifizieren eines weiteren mobilen Objekts, das in der ersten Region vorhanden ist, auf Basis der ersten Informationen,
wobei das Ableiten mindestens eines von Folgendem beinhaltet:
(a) Ableiten, dass das mobile Objekt in der ersten Region, in der das weitere mobile Objekt vorhanden ist, bewegbar ist, wenn das weitere mobile Objekt eine erste Bedingung erfüllt; oder
(b) Ableiten, dass das mobile Objekt in der ersten Region, in der das weitere mobile Objekt vorhanden ist, nicht bewegbar ist, wenn das weitere mobile Objekt eine zweite Bedingung erfüllt.

7. Programm zum Veranlassen eines Computers, das Informationserzeugungsverfahren nach einem der Ansprüche 1 bis 6 auszuführen.

8. Informationserzeugungsvorrichtung, die dazu ausgelegt ist, Lerndaten für ein Lernmodell zu erzeugen, das ableitet, ob ein mobiles Objekt (100) in einer vorbestimmten Region bewegbar ist, wobei die Informationserzeugungsvorrichtung Folgendes umfasst:
einen Erhalter, der dazu ausgelegt ist, mindestens (i) erste Informationen und (ii) zweite Informationen zu erhalten, wenn sich das mobile Objekt in einer ersten Region bewegt, wobei die ersten Informationen von einem Sensor erhalten werden, der im mobilen Objekt bereitgestellt ist, wobei sich die zweiten Informationen auf die erste Region beziehen;
eine Ableitungseinheit, die dazu ausgelegt ist, auf Basis der ersten Informationen abzuleiten, ob das mobile Objekt in der ersten Region bewegbar ist; und
einen Erzeuger, der dazu ausgelegt ist, vierte Informationen für das Lernmodell zu erzeugen, wobei die vierten Informationen die ersten Informationen, die zweiten Informationen und dritte Informationen miteinander verknüpfen, wobei die dritten Informationen ein Ableitungsergebnis anzeigen, das von der Ableitungseinheit erhalten wird,
**dadurch gekennzeichnet, dass** der Erhalter ferner eine Schwierigkeit der Bewegung des mobilen Objekts (100) schätzt,
wobei der Erzeuger das Erzeugen der vierten Informationen beinhaltet, die die ersten Informationen, die zweiten Informationen, fünfte Informationen und die dritten Informationen miteinander verknüpfen, wobei die fünften Informationen ein Schätzergebnis der Schwierigkeit anzeigen, das beim Schätzen erhalten wird, und
wobei das Erzeugen nur durchgeführt wird, wenn die dritten Informationen und die fünften Informationen eine vorbestimmte Bedingung erfüllen.

## Revendications

1. Procédé de génération d'informations réalisé par un dispositif de génération d'informations qui génère des données d'apprentissage pour un modèle d'apprentissage qui établit par inférence si un objet mobile (100) peut se déplacer dans une région prédéterminée, le procédé de génération d'informations comprenant les étapes suivantes :
obtenir au moins (i) des premières informations et (ii) des deuxièmes informations lorsque l'objet mobile (100) se déplace dans une première région, les premières informations étant obtenues à partir d'un capteur prévu dans l'objet mobile (100), les deuxièmes informations se rapportant au déplacement de l'objet mobile (100) ;
établir par inférence si l'objet mobile (100) peut se déplacer dans la première région selon les deuxièmes informations ; et
générer des quatrièmes informations pour le modèle d'apprentissage, les quatrièmes informations associant les premières informations, les deuxièmes informations et des troisièmes informations ensemble, les troisièmes informations indiquant un résultat d'inférence qui est obtenu lors de l'inférence,
**caractérisé en ce que** le procédé comprend en outre :
l'estimation d'une difficulté dans le déplacement de l'objet mobile (100), dans lequel la génération comporte la génération des quatrièmes informations qui associent les premières informations, les deuxièmes informations, des cinquièmes informations et les troisièmes informations ensemble, les cinquièmes informations indiquant un résultat d'estimation de la difficulté obtenue lors de l'estimation, et
dans lequel la génération n'est réalisée que lorsque les troisièmes informations et les cinquièmes informations satisfont à une condition prédéterminée.

2. Procédé de génération d'informations selon la revendication 1, dans lequel l'inférence est réalisée selon qu'une différence entre des données de déplacement de l'objet mobile (100) pendant le déplacement dans la première région et une valeur seuil se situe ou non dans une plage prédéterminée, les données de déplacement étant incluses dans les premières informations obtenues lorsque l'objet mobile (100) s'est déplacé selon les deuxièmes informations.

3. Procédé de génération d'informations selon la revendication 2, dans lequel les deuxièmes informations sont entrées par un opérateur qui commande à distance l'objet mobile (100).

4. Procédé de génération d'informations selon l'une des revendications 1 à 3,
dans lequel les quatrièmes informations comportent une fiabilité qui est estimée sur la base des premières informations.

5. Procédé de génération d'informations selon l'une des revendications 1 à 4, comprenant :
l'obtention de sixièmes informations qui divisent la première région en une pluralité de segments pour des régions mobiles et non mobiles,
dans lequel les quatrièmes informations comportent une image combinée dans laquelle des informations indiquant si l'objet mobile (100) peut se déplacer sur la base des troisièmes informations est superposée a une image de la première région incluse dans les premières informations pour chacun de la pluralité de segments obtenus en divisant l'image de la première région selon les sixièmes informations.

6. Procédé de génération d'informations selon l'une des revendications 1 à 5, comprenant les étapes suivantes :
identifier un autre objet mobile qui est présent dans la première région sur la base des premières informations,
dans lequel l'inférence comporte au moins l'une des opérations suivantes :
(a) établir par inférence que l'objet mobile peut se déplacer dans la première région où l'autre objet mobile est présent lorsque l'autre objet mobile satisfait à une première condition ; ou
(b) établir par inférence que l'objet mobile ne peut pas se déplacer dans la première région où l'autre objet mobile est présent lorsque l'autre objet mobile satisfait à une deuxième condition.

7. Programme amenant un ordinateur à exécuter le procédé de génération d'informations selon l'une des revendications 1 à 6.

8. Dispositif de génération d'informations qui est configuré pour générer des données d'apprentissage pour un modèle d'apprentissage qui établit par inférence si un objet mobile (100) peut se déplacer dans une région prédéterminée, le dispositif de génération d'informations comprenant :
un dispositif d'obtention qui est configuré pour obtenir au moins (i) des premières informations et (ii) des deuxièmes informations lorsque l'objet mobile se déplace dans une première région, les premières informations étant obtenues à partir d'un capteur prévu dans l'objet mobile, les deuxièmes informations se rapportant à la première région ;
une unité d'inférence qui est configurée pour établir par inférence si l'objet mobile peut se déplacer dans la première région sur la base des premières informations ; et
un générateur qui est configuré pour générer des quatrièmes informations pour le modèle d'apprentissage, les quatrièmes informations associant les premières informations, les deuxièmes informations et des troisièmes informations ensemble, les troisièmes informations indiquant un résultat d'inférence qui est obtenu par l'unité d'inférence,
**caractérisé en ce que**
le dispositif d'obtention estime en outre une difficulté dans le déplacement de l'objet mobile (100),
dans lequel le générateur comporte la génération des quatrièmes informations qui associent les premières informations, les deuxièmes informations, des cinquièmes informations et les troisièmes informations ensemble, les cinquièmes informations indiquant un résultat d'estimation de la difficulté obtenue lors de l'estimation, et
dans lequel la génération n'est réalisée que lorsque les troisièmes informations et les cinquièmes informations satisfont à une condition prédéterminée.
